# EUROPEAN PATENT APPLICATION

(11) **EP 3 539 705 A1**
(43) Date of publication of application: **18.09.2019**
(21) Application number: 18462002.9
(22) Date of filing: 14.03.2018
(51) Int. Cl.: B23H 7/30, B23H 9/14, B23H 7/26, B23H 9/10

(54) **SYSTEM AND METHOD FOR CONTROL OF AN EDM DRILLING PROCESS**

(71) Applicant: AQ Anton Kft., 8900 Zalaegerszeg (HU)
(72) Inventor: Kis, Krisztián Balázs, H-5624 Doboz (HU); Németh, András, H-8900 Zalaegerszeg (HU); Szépligeti, András, H-8900 Zalaegerszeg (HU); Viharos, Zsolt János, H-2400 Dunaújváros (HU)
(74) Representative: Harangozo, Gabor

(57) **Abstract**

The method of drilling a hole (120) in a workpiece (110) by an electric discharge machining process comprises the steps of feeding a drilling electrode (100) in the workpiece (110) to form a hole (120); monitoring the position of the electrode (100); detecting a first position (P1) of the electrode (100) where the electrode breaks through the workpiece (110) and enters a space (140) with an opposite surface (141) to be protected against drilling; further monitoring the position of the electrode (100); checking whether the electrode (100) has reached a second position (P2) where completion of the hole (120) is determined, or a third position (P3) where the electrode (100) is determined to reach said opposite surface (141); and stopping feeding the electrode (100) when it is determined that the electrode (100) has reached either said second position (P2) or said third position (P3).

## Description

### TECHNICAL FIELD

The present invention relates to controlling an electrical discharge machining process, and more particularly to a method and a system for control of the feed of the electrode in an electrical discharge machining process of making a hole in a workpiece.

### BACKGROUND OF THE INVENTION

Electrical discharge machining (EDM) is a special technology of metalworking used in the manufacture of various metallic components, including for example, gas turbine components such as turbine blades. Instead of exerting high physical forces, EDM uses high energy electrical discharges, i.e. sparks, between an electrode and an electrically conductive workpiece to induce impact waves and thereby to remove material from the workpiece. The electrode is positioned near the workpiece, separated by only a small distance or gap.

In the electric discharge machining process, the gap between the electrode and the workpiece is filled with a dielectric fluid medium. A differential voltage of specified magnitude is applied between the electrode and the workpiece. The applied voltage causes the dielectric medium to ionize and break down. Current then starts to flow between the electrode and the workpiece and through the dielectric medium. The current causes heat to be generated at the surface of the workpiece. The heat results in a significant temperature rise and localized melting of the workpiece material. The molten portions of the workpiece are then removed from the surface of the workpiece.

One of the most challenging features of EDM is variability in the technological parameters and properties of the electrode and the workpiece. For example, due to the electrical discharges, both of the workpiece and the electrode itself are subject to loss of material on their surfaces. The volume of material loss strongly depends on the material properties of the electrode and the workpiece, the geometry of the electrode and the workpiece, as well as many other technological parameters. Consequently, it is difficult or in most cases impossible to accurately determine the position of the tip of the machining electrode that is moving within the material of the workpiece.

A well-know type of the EDM processes, the so-called fast hole EDM drilling uses an elongated electrode that may be adapted to machine blind holes, through-holes or recesses in a workpiece. Fast-hole EDM drilling is therefore particularly useful for machining, for example, cooling holes in the blades of gas turbine engines. In the following part of the description, only this kind of EDM process will be dealt with and therefore it will be simply referred to as "EDM process".

Within the context of the present invention, the EDM process is used to create a cylindrical through-hole with a predetermined length and diameter in a workpiece by means of a machining electrode. While the electrode is being fed within the workpiece, the electrode tip is gradually wearing due to the sparks, and thus a conical tip is developing at the inner end of the electrode. By the time the electrode pierces the workpiece, the length of the conical electrode tip can be a multiple of the diameter of the hole. For completing the hole, however, the entire length of the conical tip of the electrode has to pass the inner aperture of the hole so that the hole has a constant diameter along its entire length. Due to the significant length of the holes and the relatively high uncertainty of the extent of wearing of the machining electrode during the process, it is difficult to determine the exact position of the inner end of the electrode within the workpiece, i.e. the actual position of machining, and therefore determining the various positions of the electrode during the machining process, such as the breakout position or the position of hole completion, also suffers from a significant uncertainty.

When the hole to be created opens into an exterior or interior space of the workpiece that has an opposite surface to be protected against drilling, it has the risk that the tip of the electrode reaches the surface, e.g. a back wall of the interior space, opposite to the hole before the actual completion of the hole. In this situation, feeding the electrode further would result in damaging the opposite surface.

US Pat. Application No. 4,484,051 A discloses an electric discharge machining apparatus for forming a hole in a workpiece, in which, when the electrode penetrates the workpiece, the machining operation is automatically ended. The apparatus comprises a gap voltage detecting unit for detecting a gap voltage variation pattern which is applied to a power supply unit adapted to apply a predetermined machining voltage across said electrode and workpiece, and a gap voltage variation pattern judging circuit for comparing a gap voltage variation pattern from said servo voltage detecting unit with a number of gap voltage variation patterns which are stored in said gap voltage variation pattern judging circuit in advance. During the machining operation, a time instant when an end of said electrode penetrates said workpiece being detected from the corresponding gap voltage variation pattern, and optionally from additional process parameters, so that the machining operation may be ended. One of the drawbacks of this solution is that it regards the event of penetration of the electrode through the workpiece as an instantaneous event instead of a time-dependant factor. Another drawback of this solution is that it does not deal with the case where the hole opens into an interior space, the back wall of which should be protected against damaging by the electrode.

One possible solution for determining a more accurate position of the machining electrode, i.e. the position of its inner end, is to use an adaptive model to predict the actual parameter values with high confidence and thereby to control the machining process in a more reliable way, thus allowing higher productivity and lower inspection costs.

US Pat. No. 6,850,874 discloses an apparatus for predicting a characteristic of an attribute of a product produced by a stochastic machining process. The apparatus includes at least one sensor that senses the characteristic of at least one parameter associated with the stochastic machining process and provides at least one measurement signal indicative thereof, and further includes a signal processor having a model indicative of a correspondence between the characteristic of the at least one parameter associated with the stochastic machining process and the characteristic of the resulting product attribute, and uses said model to generate a signal indicative of the predicted characteristic of the attribute of the product.

Although the integration of an adaptive model into the machining process for predicting the actual parameter values renders the position determination more accurate and more reliable, this technique itself does not provide a solution for reducing or eliminating the hazard of damaging other parts of the workpiece or any part of the machining tool while the hole is being formed. In particular, a back wall of an interior space within the workpiece or a specific surface of a supporting element of the machining tool might be subject to an undesired interaction with the machining electrode.

### SUMMARY OF THE INVENTION

In view of the above solution, there is a need for an improved EDM control technique to reduce or eliminate the risk of damaging a surface to be protected, in particular the back wall of an interior space of a workpiece, while drilling a hole in a workpiece.

Therefore it is an object of the present invention to provide a method and a system for control of an EDM drilling process so that a surface to be protected against drilling, like the back wall of an interior space of a workpiece opposite to the hole to be formed is kept undamaged even if the hole itself is not determined to be ready.

These and other objects are achieved by providing a method of drilling a hole in a workpiece by an electric discharge machining process, the method comprising the steps of:
- feeding a drilling electrode in the workpiece to form a hole;
- monitoring the position of the electrode;
- detecting a first position of the electrode where the electrode breaks through the workpiece and enters a space with an opposite surface to be protected against drilling;
- further monitoring the position of the electrode;
- checking whether the electrode has reached a second position where completion of the hole is determined, or a third position where the electrode is determined to reach said opposite surface; and
- stopping feeding the electrode when it is determined that the electrode has reached either said second position or said third position.

Preferably, at least one of said first, second and third positions is determined by the steps of predicting a stage value for an actual stage of the machining process by using an adaptive process model means indicative of a correspondence between a plurality of sampled values of at least one process parameter and a set of predicted stage values; and identifying the end point of a stage, by means of a machining control module, on the basis of the predicted stage values provided by said process model means.

Preferably, the at least one process parameter comprises at least one of a control signal generated for the electrode and a status signal generated by a sensor.

It is preferred that the step of predicting a stage value comprises the steps of calculating a set of derivative process attributes based on said sampled process parameters; obtaining a set of predicted process parameters based on said sampled process parameters and said set of derivative process attributes; and determining a predicted stage value from said set of predicted process parameters based on a set of decision rules.

In the step of obtaining a set of predicted process parameters, an artificial neural network is preferably used for defining a correspondence between the sampled values of said at least one process parameter and said set of the predicted stage values.
The above objects are further achieved by providing a system for drilling a hole in a workpiece by an electric discharge machining process, wherein the system comprises a machining tool having a drilling electrode, and machining control means for receiving and processing measurement signals from at least one sensor of said machining tool and for generating control signals for said machining tool. The machining control means is operable to control the feed of the drilling electrode in the workpiece to form a hole. The machining control means is configured to:
- feed a drilling electrode in the workpiece;
- monitor the position of the electrode;
- detect a first position of the electrode where the electrode breaks through the workpiece and enters into a space with an opposite surface to be protected against drilling;
- check whether the electrode has reached a second position where completion of the hole is determined, or a third position where the electrode is determined to reach said opposite surface; and
- stop feeding the electrode when it determines that the electrode has reached either said second position or said third position.

In a preferred embodiment of the system, the system further comprises a process model for providing a predicted process attribute for the machining control means and the process model comprises:
- at least one adaptive prediction module used for generating a set of predicted process parameters from at least the measurement signals of the at least one sensor of said machining tool and the control signals of the machining tool, and
- a decision making module for providing said predicted process attribute on the basis of said predicted process parameters.

Preferably, the predicted process attribute includes a stage value for an actual stage of a set of predetermined stages of the machining process.

Finally, the above objects are also achieved by providing a computer program product including a set of computer-readable instructions stored on a data storage medium, said instructions being adapted, when executed by a computer, to carry out the steps of the method according to the present invention.
These and other objects, features and advantages of the present invention will become more apparent in the light of the following detailed description of exemplary embodiments thereof, as illustrated in the accompanying drawings.

### BRIEF DESCRIPTION OF THE DRAWINGS

FIG. 1 schematically illustrates the subsequent stages of a conventional EDM process.
FIGs. 2A and 2B schematically illustrate the subsequent stages of an EDM process according to the present invention at different drilling scenarios.
FIG. 3 is a flow diagram showing the main steps of the control method according to the present invention.
FIG. 4 is a schematic block diagram of a preferred embodiment of the integrated machining control system according to the present invention.
FIG. 5 is a flow diagram showing the steps of use of the process model in a machine control scheme, in accordance with the present invention.

### DETAILED DESCRIPTION OF THE INVENTION

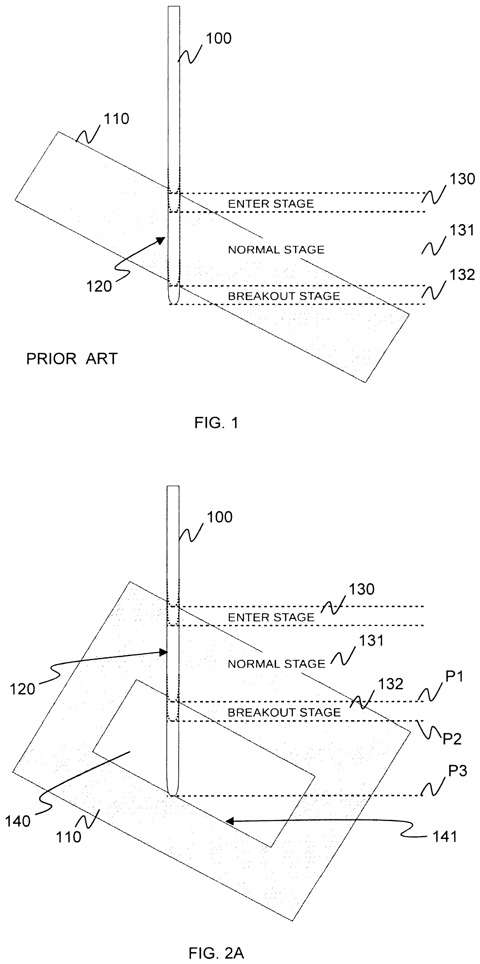

As schematically illustrated in Fig. 1, three main stages are defined in a conventional EDM process based on the position of a drilling electrode 100 with respect to a workpiece 110, in which a hole 120 is to be formed. These main stages include an enter stage 130, a normal machining stage 131 and a breakout stage 132.

The enter stage 130 starts at a position where the electrode 100 gets into contact with the workpiece 110 through the first spark. This position normally resides outside the workpiece 110 but very close to the surface of the workpiece 110. The enter stage 100 terminates at a position of the hole where the machining process becomes stable, i.e. when the conical tip of the electrode 100 has passed the surface plane of the workpiece 110 and the electrode 100 has intruded into the workpiece 110 with its entire cross-section.

The normal machining stage 131 starts right at the end of the preceding enter stage 130 and terminates at a position where the electrode tip first breaks out of the workpiece 110. This stage 131 can be regarded as a stable machining phase since the rate of material removal is substantially uniform while the electrode 100 is moving in this stage 131. Obviously, the resulted diameter of the hole cannot be entirely uniform either in this stage 131 due to the inherent imperfectness of the material of the electrode 100 and the workpiece 110 and also to the regulatory variation of the machining control signals.

The breakout stage 132 starts right at the end of the preceding normal stage 131 and terminates at a position where the hole 120 is determined to be completed. The hole 120 is assumed to be ready when the entire conical tip of the electrode 100 has passed the breakout surface of the workpiece 100 and thereby the hole 120 has substantially the same diameter along its entire length.

The above introduced stages of the machining process are rather different in terms of their parameter settings and therefore in most cases it is necessary to make a distinction between them for a proper adjustment of the control parameters in the various stages. To this end, the starting and end points of these stages have to be recognised in the most accurate and reliable way. Any deviation from the ideal starting/end points of these stages during a machining process may result in additional material loss and/or increased production time. For example, if the end of the breakout stage is recognised too late, the period of machining will be longer, which causes lower production rate. On the contrary, if the end of the breakout stage is recognised too early, the hole will not be complete at the termination of the machining process and therefore subsequent operations will be needed to improve the quality of the hole, which ultimately also increases the production time.

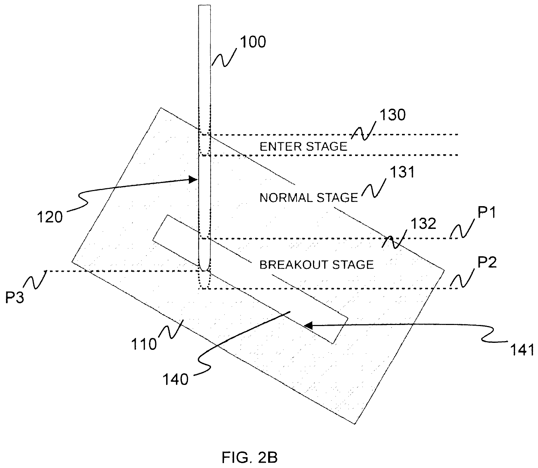

When the workpiece comprises an interior space, into which the hole to be formed opens, or the hole to be formed opens into an exterior space that has a surface to be protected against drilling, another problem may arise in a conventional EDM drilling process. Once the tip of the electrode has broken out the wall of the workpiece, the electrode tip further moves ahead into the opposite surface of the interior or exterior space until the completion of the hole is determined on the basis of the sensor signals. The further feeding of the electrode depends on a number of technological parameters of stochastic nature as mentioned above. There exists therefore a risk that the tip of the electrode reaches the surface to be protected before completion of the hole were determined and the machining process were stopped, which would result in damaging the opposite surface. Since in most cases no damage or at most negligible damage of the surface to be protected is allowed for quality insurance reasons, detection of the contact between the electrode tip and the opposite surface in due time is necessary in order to avoid any unallowable damaging the surface. Thus a specific back-strike position is defined in the machining process. The back-strike position is defined as a position where the tip of the electrode 100 gets into contact with the opposite surface, e.g. a supporting surface of the machining tool or a back wall of an interior space of the workpiece. Figures 2A and 2B show the machining stages 130, 131, 132 and the positions of interest in the EDM machining process according to the present invention, when the hole to be formed opens into an interior cavity of the workpiece.

Within the context of the present invention it is assumed that that the surface to be protected, when it is not part of the workpiece itself, has the same or substantially the same physical properties, in particular electrical and mechanical properties, as the workpiece. Furthermore, the interior space of the workpiece may equally be a closed space or an open space.

In order to avoid damaging the back wall 141 of the interior space 140, once the electrode 100 has penetrated the workpiece 110 at a first position P1, the position of the moving electrode 100 is further monitored and it shall be detected which one of the end point of the breakout stage 132, namely a second position P2, and the back-strike position P3 the electrode 100 has first reached. Either the second position P2 or the third position P3 if has been reached by the tip of the electrode 100, the machining process shall be terminated.

With respect to the termination of the machining process, a first scenario is illustrated in Figure 2A. In this scenario the electrode tip reaches the end point of the breakout stage 132, i.e. the second position P2 before it would reach the back-strike position P3, which means that the hole is determined to be completed in a normal mode. This scenario typically takes place when the interior space is large enough and the conical tip of the electrode is shorter than the distance between the first position P1 and the back-strike position P3.

However, if the electrode tip is determined to reach the back-strike position P3 before the hole would be completed, i.e. a portion of the conical tip of the electrode 120 is still assumed to be within the breakout stage 132 when the electrode reaches the back wall of interior space, the machining process will be immediately terminated in an emergency mode. This scenario is illustrated in Figure 2B. It is noted that in this case, the position P2 shown in Figure 2B, which is associated with the hole completeness, exists only in theory since the tip of the electrode 100 cannot reach this position P2. This scenario typically takes place when the interior space is rather narrow and the conical tip of the electrode is longer than the distance between the first position P1 and the back-strike position P3.

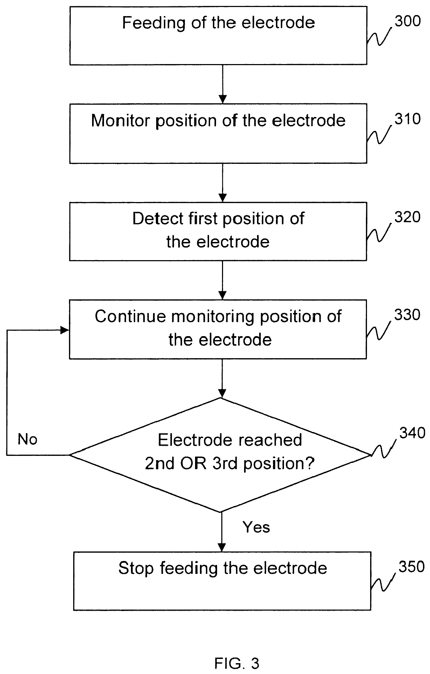

After terminating the process in the emergency mode, the status of the hole may be examined to determine whether the hole is actually ready, or it still requires further machining, for example by using a new electrode having a shorter tip portion, or other operations to finish the hole.
The method of controlling an EDM drilling process in accordance with the present invention includes the steps illustrated in the flow diagram of Figure 3. The steps of the method are described in relation to a workpiece with an interior space as shown in Figures 2A and 2B. It is obvious for those skilled in the art how these steps can be implemented when the workpiece has an exterior space with a surface to be protected against drilling.

In step 300, a continuous feeding of the drilling electrode in the workpiece is started. The electrode is fed at a controlled rate specified by a control system using at least one sensor signal of the machining tool. Optionally, the control system may use an adaptive prediction model to produce more reliable values for the measured status parameters and/or to predict appropriate values for the control parameters in the EDM process. The use of such an adaptive prediction model will be described later in connection with the preferred embodiments of the method and the system according to the invention.

Once the drilling process has commenced, the position of the electrode is monitored in step 310 using the control system.

Based on the measurement signal of at least one sensor of the machining tool, in step 320 it is detected that the electrode has reached a first position (corresponding to the position P1 in Figure 2A) where the electrode tip pierces the workpiece and enters the interior space thereof, i.e. when the tip of the electrode has reached the end point of the normal stage (i.e. stage 131 in Figure 2A).

Once the electrode has passed the afore-mentioned first position, in step 330 the position of the electrode is further monitored to recognize whether the electrode has reached a second position where completion of the hole is determined, or a third position where the electrode is determined to reach the back wall of the interior space. In this step 330, the second position corresponds to the position where the electrode tip has reached the end point of the breakout stage (i.e. position P2 in Figure 2A), whereas the third position corresponds to the position where the electrode tip has reached the back-strike position (i.e. position P3 in Figure 2B).

In step 340 it is checked whether the electrode has reached either said second position or said third position. If neither, the process returns to step 330 and the step of monitoring the position of the electrode is continued. However, if it is determined in step 340 that the electrode has reached either its second position or its third position, i.e. either the hole is assumed to be complete or the electrode tip is assumed to reach the back wall of the interior space, the feeding of the electrode is stopped and the drilling process is terminated in step 350.

In a preferred embodiment of the control method according to the present invention, at least one of the process parameters, including the status parameters and the control parameters, is obtained using a process model of any kind, such as a neural network model. The process model may receive the signals generated by the sensors and in response provides one or more prediction signals indicative of one or more predicted values of various parameters of the EDM process. For example, in one embodiment, the process model may provide prediction signals indicative of any one or more of the following status attributes: the actual machining stage, the actual position of the electrode, one or more measured values of the stochastic process parameters, such as voltage, current, temperature, etc. of the electrode and/or the workpiece, etc, and may provide prediction signals indicative of any one or more of the following control attributes: feeding rate of the electrode, current to be applied on the electrode, etc. Due to the process model the actual position of the electrode and thus the various machining stages of the EDM process during a machining process can be determined with a higher reliability and a higher accuracy than by the conventional electric or electronic measurement circuits. Additionally, the process model may also be used to predict other process parameters, such as physical properties of the workpiece, other features of the machining process, etc.

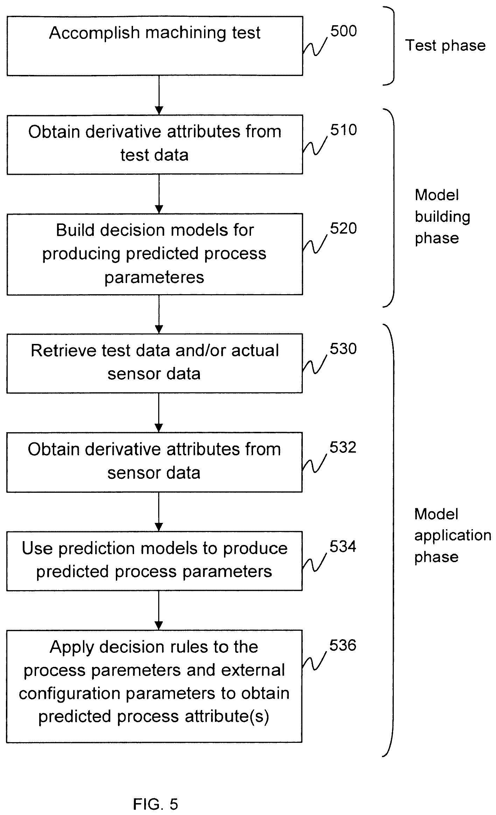

The use of the process model in a machine control scheme includes the following steps as shown in Figure 5.

In a first step 500, a number of specific machining tests may be accomplished with sampling a plurality of selected status and control parameters to obtain a set of sampled process parameters. Along with the parameter sampling, the actual stage of the machining process is also identified and associated with the sampled parameter values. During this test phase, for example, a number of holes having various geometrical features are made and the voltage, the current and the electrode position (and/or any other process parameter) are sampled at a specific sampling rate, while visual and acoustic observations are also taken. Based on the analysis of the sampled parameter values and the observed information, the initial points and the end points of the subsequent machining stages are identified and stored with the associated test data in a data store.

In a second step 510, all data previously collected in the test phase may be processed to obtain specific derivative attributes describing short-term dynamics of the machining process. In this step, for example, a moving mean value, a moving standard deviation values and/or any other statistical or technological parameter values are calculated, as derivative attributes, from the measured test data.

Additionally, in step 520, one or more prediction models may be built to produce a set of predicted process parameters from the measured test data and the derivative process attributes. The prediction models may, for example, be adaptive neural networks that may be trained so that they can predict more accurate and more reliable values for the process parameters. Steps 510 and 520 together define the phase of model building.

The previously trained process model may then be applied in a real machining process to provide an intelligent process control under real production circumstances. This phase of model application may include, for example, retrieving stored values of the sampled test data and/or the actual measurement data of the sensors at a predetermined rate in step 530, processing the retrieved data to obtain derivative attributes describing the short-term dynamics of the machining process in step 532, using the prediction models trained in the test phase for producing predicted process parameters in step 534, applying a set of decision rules to predicted process parameters provided by the prediction model(s) and optionally, to other preset configuration parameters in step 536 for providing a final value for one or more predicted process attributes. The predicted process attribute may, for example, include an identification of the actual machining stage (represented by a stage value) or a predicted value for a specific control parameter for an updated adjustment of the machining tool.

The use of the above described process model is beneficial from many points of view. For example, it allows an effective aggregation of any number of different sensors, thereby providing a very high level of adaptivity with respect to various process settings and various machining conditions. At the same time, it is well scalable in terms of both of the number of sensor signals and the number of machining conditions, which results in an effective tool to recognize and identify a great number of predetermined situations of the production.

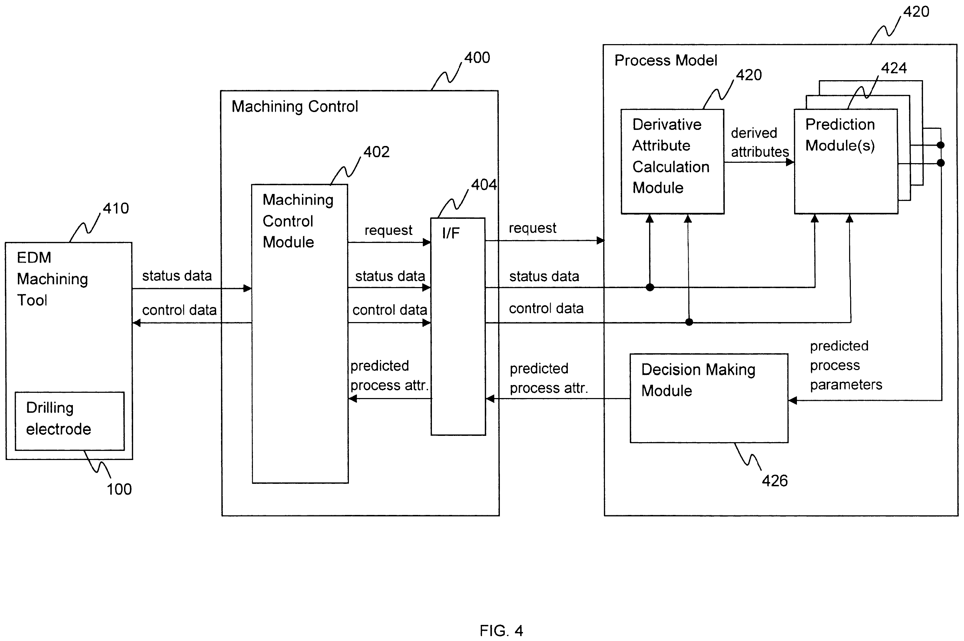

Figure 4 shows a schematic block diagram of a preferred embodiment of the integrated machining control system according to the present invention, wherein the control system includes a machine control means 400 and a process model means 420.

The machining control means 400 comprises a machining control module 402 that receives status signals from a machining tool 410 and sends control signals to the same. The status signals of the machining tool 411 are generated by one or more sensors, typically voltage sensors, current sensors, position sensors, pressure sensors, etc. The control signals of the machining control module 402 typically comprise voltage control signals, electrode feed rate control signal, etc. which are generated in response to the status signals received from the sensors of the machining tool 410 and the attribute values received from an intelligent process model means 420 through an interface 404.

The process model means 420 generates predicted values for one or more process attributes, like the actual machining stage, for the machining control means 400 upon request. The requests for updated attributes may be sent to the process model means 420 periodically, at a predetermined rate, typically within the range from 1 to 1000 requests/sec, through the interface 404, along with the actual values of the control signals and the status signals. The status signals convey measurement data provided by the sensors of the machining tool. Alternatively, the requests for updated process attributes may be sent to the process model means 420 only when specific control conditions are met.

The process model means 420 may comprise a derivative attribute calculation module 422, one or more prediction models 424 and a decision making module 426. The derivative attribute calculation module 422 receives the actual values of the control and status signals provided by the machining control module 402 and in response to these signals, it calculates one or more derivative attributes, such as statistical attributes of various process parameters. The derivative attributes are then forwarded to the at least one prediction module 424, which also receives the actual values of the control and status signals from the machining control module 402. Based on the derivative attributes and the actual values of the control and status signals, the at least one prediction module 424 produces one or more predicted process parameters. The prediction module 424 may, for example, be an artificial neural network that includes a trainable learning algorithm. The adaptive prediction modules 424 are basically trained in the test phase (see step 500 of Figure 5), however, their fine tuning may take place even during the normal operation of the system.

The predicted process parameters are then sent from the at least one prediction modules 424 to the decision making module 426 for obtaining a value for one or more predicted process attributes, like the actual machining stage. The decision making module 426 applies a set of predefined decision rules to the predicted process parameters and optionally, to a set of external configuration parameters. Due to the use of the one or more adaptive prediction modules 424 and the decision making module 426, the process model means 420 can provide a set of predicted process attributes with much higher accuracy and at a much higher confidence than the conventional electronic processing circuits. The predicted process attributes are returned to the machining control module 402 through the interface 404. Thus the machining control module 402 can generate the control signals for the machining tool 410 on the basis of the status signals provided by the sensors of the machining tool 410 and the predicted process attributes provided by the adaptive process model means 420.

In a particularly preferred embodiment of the control system of the invention, the predicted process attributes include a value identifying the actual stage of the machining process. Accordingly, the machining control module can recognize any change in the machining stages based on the predicted process attributes, so it can terminate the machining process when either the electrode has reached the end of the breakout stage or the electrode has reached the back-strike position.

The control method and the control system according to the present invention can be used to accurately and reliably predict the termination or modification condition of an EDM machining process so that significant damaging of the workpiece be avoided. Thus, the present invention offers a potential for reducing and/or eliminating the need for post inspection and therefore the cost, labour, material, and space associated with such inspection. In addition, the present invention also introduces a more robust and reliable approach to quality measure enabling better control and tracking of product quality issues.

The present invention also relates to a computer program product including a set of computer-readable instructions stored on a data storage medium, wherein the instructions of the computer program product are adapted, when executed by a computer, to carry out the steps of the method according to the present invention specified above.

Those skilled in the art will recognize that although the various components of the control system, like the machine control means and the process model means, described in relation with the preferred embodiments primarily comprise programmed hardware, i.e. executed in software by a computer, it may take other forms, including hardwired hardware configurations, hardware manufactured in integrated circuit form, firmware, and combinations thereof. Furthermore, it should be understood that although the disclosed embodiments comprise a digital system with periodically sampled signals, the present invention may also be embodied in an analog system with continuous signals, or a combination of digital and analog systems.

Those skilled in the art should recognize that the sensors used in the preferred embodiments may sense, in addition to or instead of displacement, voltage and current, any other suitable process parameters for the machine control system.

While the particular invention has been described with reference to specific preferred embodiments, this description is not meant to be construed in a limiting sense. It is understood that various modifications of the disclosed embodiments, as well as additional embodiments of the invention, will be apparent to persons skilled in the art upon reference to this description, without departing from the spirit of the invention, as recited in the claims appended hereto. It is therefore contemplated that the appended claims will cover any such modifications or embodiments as fall within the true scope of the invention.

## Claims

1. A method of drilling a hole (120) in a workpiece (110) by an electric discharge machining process, the method comprising the steps of:
- feeding (300) a drilling electrode (100) in the workpiece (110) to form a hole (120);
- monitoring (310) the position of the electrode (100);
- detecting (320) a first position (P1) of the electrode (100) where the electrode breaks through the workpiece (110) and enters a space with an opposite surface to be protected against drilling;
- further monitoring (330) the position of the electrode (100);
- checking (340) whether the electrode has reached a second position (P2) where completion of the hole (120) is determined, or a third position (P3) where the electrode is determined to reach said opposite surface; and
- stopping (350) feeding the electrode (100) when it is determined that the electrode (100) has reached either said second position (P2) or said third position (P3).

2. The method of claim 1, wherein at least one of said first, second and third positions is determined by
- predicting a stage value for an actual stage of the machining process by using an adaptive process model means (420) indicative of a correspondence between a plurality of sampled values of at least one process parameter and a set of predicted stage values, and
- identifying the end point of a stage, by means of a machining control module (402), on the basis of the predicted stage values provided by said process model means (420).

3. The method of claim 2, wherein said at least one process parameter comprises at least one of a control signal generated for the electrode and a status signal generated by a sensor.

4. The method of claim 3, wherein the step of predicting a stage value comprises
- calculating a set of derivative process attributes based on said sampled process parameters,
- obtaining a set of predicted process parameters based on said sampled process parameters and said set of derivative process attributes, and
- determining a predicted stage value from said set of predicted process parameters based on a set of decision rules.

5. The method of claim 4, wherein the step of obtaining a set of predicted process parameters comprises using an artificial neural network for defining a correspondence between the sampled values of said at least one process parameter and said set of the predicted stage values.

6. A system for drilling a hole in a workpiece by an electric discharge machining process, wherein the system comprises
- a machining tool (410) having a drilling electrode (100),
- machining control means (400) for receiving and processing measurement signals from at least one sensor of said machining tool (410) and for generating control signals for said machining tool (410), said machining control means (400) being operable to control the feed of the drilling electrode (100) in the workpiece (110) to form a hole (140),
wherein said machining control means (400) is configured to:
- feed a drilling electrode in the workpiece (110);
- monitor the position of the electrode (100);
- detect a first position (P1) of the electrode (100) where the electrode breaks through the workpiece and enters into a space with an opposite surface to be protected against drilling;
- check whether the electrode (100) has reached a second position (P2) where completion of the hole is determined, or a third position (P3) where the electrode is determined to reach said opposite surface; and
- stop feeding the electrode (100) when it determines that the electrode has reached either said second position (P2) or said third position (P3).

7. The system of claim 6 further comprising a process model (420) for providing a predicted process attribute for the machining control means (400), said process model (420) comprising
- at least one adaptive prediction module (424) used for generating a set of predicted process parameters from at least the measurement signals of the at least one sensor of said machining tool (410) and the control signals of the machining tool, and
- a decision making module (426) for providing said predicted process attribute on the basis of said predicted process parameters.

8. The system of claim 7, wherein said predicted process attribute includes a stage value for an actual stage of a set of predetermined stages of the machining process.

9. A computer program product including a set of computer-readable instructions stored on a data storage medium, said instructions being adapted, when executed by a computer, to carry out the steps of the method according to any one of claims 1 to 5.
